# EUROPÄISCHE PATENTANMELDUNG

(11) **EP 0 794 519 A1**
(43) Veröffentlichungstag der Anmeldung: **10.09.1997**
(21) Anmeldenummer: 97100004.7
(22) Anmeldetag: 02.01.1997
(51) Int. Cl.: G07F 7/10, G06K 19/07

(54) **Chipkarte**

(30) Priorität: 09.03.1996 DE 19609184
(71) Anmelder: Salge, Wolfgang, 32602 Vlotho (DE)
(72) Erfinder: Salge, Wolfgang, 32602 Vlotho (DE)
(74) Vertreter: Kaufmann, Sigfrid, Doz. Dr.-Ing. habil.

(57) **Zusammenfassung**

Die Erfindung betrifft eine Chipkarte, die in kürzesten Fristen vielfältig erweiterten Funktionen angepaßt werden kann. Im Betriebssystem der erfindungsgemäßen Karte ist ein Interpreter, der nachladbare Kommandos während des Betriebes der Karte übersetzt und ausführt, implementiert.

Der Interpreter verhindert die Ausführung von unbekanntem Code und Zugriffe auf ungültige Speicheradressen. Die Karte enthält erstmals keinen fest definierten Kommandoumfang. Vielmehr kann der Anwender seinen Kommandoumfang selbst definieren. Die hierbei verwendete Programmiersprache ist unabhängig von dem in der Chipkarte integrierten Prozessortyp.

## Beschreibung

Die Erfindung betrifft eine Chipkarte, wie sie grundsätzlich aus vielen und sich ständig erweiternden Anwendungen bekannt ist, z. B. als Kreditkarte, Sparkassen- und EC-Karte, Zeiterfassungskarte sowie Zutrittskontroll- und Tankkarte. Gegenüber dem Stand der Technik zeichnet sie sich dadurch aus, daß erstmals der Anwender seinen Kommandoumfang selbst definieren kann. Die erfindungsgemäße Karte kann somit in kürzesten Fristen vielfältig erweiterten Funktionen angepaßt werden.

Bislang wird bei Prozessorchipkarten ein Betriebssystem mit festem Befehlsumfang vorab über die Maske im Herstellungsprozeß in den Silizium-Chip eingebracht. Dabei hat das Chipkartenbetriebssystem die Hauptaufgaben Datenübertragung von und zur Chipkarte, Ablaufsteuerung der Kommandos, Dateiverwaltung sowie Verwaltung und Ausführung von kryptografischen Algorithmen (vgl. Rankl/Effing: Handbuch der Chipkarten. Hanser-Verlag, 1995).

Unterschieden wird zwischen betriebsinternen und anwendungsspezifischen Kommandos.

Bei einem Teil der derzeitigen Betriebssysteme ist das Nachladen von direkt ausführbarem Programmcode, der aus einem oder mehreren direkt vom Prozessor ausführbaren Befehlen besteht, möglich.

Da dieser Programmcode vom Prozessor beim Ablauf nicht verifiziert werden kann, könnte es vorkommen, daß unbekannte Prozessorbefehle - OPCODEs, die im Befehlssatz des Prozessors nicht vorhanden sind - ausgeführt bzw. ungültige Speicheradressen angesprochen werden. Ungültige Speicheradressen können Adressen sein, an denen keine Hardware (RAM, EPROM, E²PROM, I/O-Ports usw.) abgebildet ist. Des weiteren besteht die Möglichkeit, bei direkt ausführbarem Programmcode die I/O-Ports so umzuprogrammieren, daß der Port zerstört wird.

Die bekannten Chipkarten haben einen festdefinierten Kommandoumfang. Die Kommandos dienen zum Speichern, Lesen und Sichern der in der Chipkarte gespeicherten Daten. Die Chipkarte kann folglich bisher nicht an erweiterte Funktionsanforderungen angepaßt werden.

Es ist daher Ziel und Aufgabe der Erfindung, die vorstehend beschriebenen Nachteile des Standes der Technik kostengünstig und absolut zuverlässig zu beseitigen.

Erfindungsgemäß wird davon ausgegangen, daß durch das Nachladen von Programmcode sich der Kommandoumfang der Chipkarte erweitern läßt. Hierfür ist im Betriebssystem der Chipkarte ein Interpreter, der nachladbaren Kommandocode während des Betriebes der Karte übersetzt und ausführt, implementiert. Der Interpreter ist ein Umsetzungsprogramm, welches einen nicht direkt vom Prozessor ausführbaren Code umsetzt und ausführt - nachfolgend IP-Code genannt. Der IP-Code ist somit prozessorunabhängig.

Der Interpreter verhindert erfindungsgemäß die Ausführung von unbekannten IP-Code und Zugriffe auf ungültige Speicheradressen.

Der Anwender kann seinen Kommandoumfang selbst definieren. Die hierfür verwendete Programmiersprache ist unabhängig von dem in der Chipkarte integrierten Prozessortyp.

Die Erfindung wird nachfolgend anhand eines Ausführungs-/Anwendungsbeispieles näher erläutert.

Möchte ein Kunde für seine Applikation eine Prozessorkarte verwenden, ist er zur Zeit an einen fest definierten Befehlsumfang gebunden. Dem steht gegenüber, daß er zur Realisierung seiner Idee eine Chipkarte benötigt, bei der er die Kommandos selbst definieren kann.

Er entwickelt auf einem unabhängigen System den Kommandoablauf sowie die Kommandokennung. Das System liefert ihm den IP-Code.

Zum Test seiner Anwendung lädt er den IP-Code in die Prozessorkarte. Diese Karte hat einen Prozessor vom Hersteller A mit 1 KB Datenspeicher.

Beim Einsatz der Chipkarten in seinen Geräten stellt der Kunde fest, daß 1 KB Datenspeicher nicht ausreicht. Er benötigt 4 KB.

Der Hersteller A hat in seinem Lieferprogramm keinen Prozessor mit dem benötigten Speicherumfang. Hersteller B kann sofort liefern. Die Prozessoren der Hersteller A und B sind nicht kompatibel.

Der Interpreter der erfindungsgemäßen Prozessorkarte verarbeitet den entwickelten IP-Code und setzt diesen Prozessor spezifisch um. Der Kunde kann somit Prozessorkarten der Hersteller A und B ohne Programmanpassungen verwenden.

Stellt der Kunde beim Einsatz der Chipkarten in seinen Geräten fest, daß bei seiner Applikation eine Funktion in der Chipkarte fehlt, erweitert er auf seinem unabhängigen System den Kommandoumfang um die fehlende Funktion. Das Programm wird in den IP-Code übersetzt und in die Chipkarte geladen.

Der Kunde kann ohne weitere Wartezeit die Chipkarte mit erweitertem Funktionsumfang in Betrieb nehmen.

## Patentansprüche

1. Chipkarte, **dadurch gekennzeichnet**, daß im Betriebssystem der Karte ein Interpreter, der nachladbaren Kommandocode während des Betriebes der Karte übersetzt und ausführt, implementiert ist.

2. Chipkarte nach Anspruch 1., **dadurch gekennzeichnet**, daß der Interpreter einen nicht direkt vom Prozessor ausführbaren und von diesem unabhängigen Code umsetzt und ausführt.
